(19) Europäisches Patentamt
European Patent Office
Office européen des brevets

(11) EP 0 765 897 A2

(12) EUROPÄISCHE PATENTANMELDUNG

(43) Veröffentlichungstag: **02.04.1997 Patentblatt 1997/14**

(51) Int. Cl.[6]: **C08G 77/28**, C08G 77/48, C08G 77/58

(21) Anmeldenummer: **96114930.9**

(22) Anmeldetag: **18.09.1996**

(84) Benannte Vertragsstaaten:
**BE CH DE ES FR GB IT LI NL**

(30) Priorität: **29.09.1995 DE 19536363**

(71) Anmelder: **DEGUSSA AG**
**60311 Frankfurt (DE)**

(72) Erfinder:
- **Wieland, Stefan, Dr.**
  **63069 Offenbach (DE)**
- **Auer, Emmanuel, Dr.**
  **60528 Frankfurt (DE)**
- **Lansink-Rotgerink, Hans, Dr.**
  **63864 Glattbach (DE)**
- **Jacobsen, Hauke, Dr.**
  **63486 Bruchköbel (DE)**
- **Gradl, Robert**
  **63755 Alzenau (DE)**

# (54) Sulfonat- und mercaptogruppenhaltige Organopolysiloxane, Verfahren zu ihrer Herstellung und Verwendung

(57) Gegenstand der Erfindung sind geformte sulfonat- und mercaptogruppenhaltige Organopolysiloxane, bestehend aus Einheiten der Formel

$$[O_{3/2}\text{-Si-}R^1\text{-}SO_3\text{-}]_x M^{x+} \quad \text{(I)},$$

wobei $R^1$ eine lineare oder verzweigte Alkylengruppe mit 1 bis 12 C-Atomen, eine Cycloalkylengruppe mit 5 bis 8 C-Atomen oder eine Einheit der allgemeinen Formeln

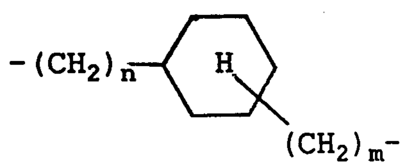

oder

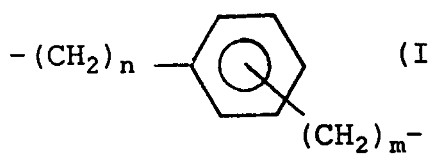

(II)

darstellt und Einheiten der Formel

$$O_{3/2}\text{-Si-}R^2\text{-SH} \quad \text{(III)}$$

mit $R^2 = R^1$, wobei die freien Valenzen der an das Siliciumatom gebundenen Sauerstoffatome durch die Siliciumatome weiterer Gruppen der Formeln (I) und/oder (II) und/oder durch die Metallatomsauerstoffgruppen der vernetzenden Brückenglieder der Formeln

$$SiO_{4/2} \quad \text{(IV)}$$

EP 0 765 897 A2

$$\left.\begin{array}{ll} \text{gegebenenfalls} & R''SiO_{3/2},\ R'SiO_{3/2}, \\ \text{und gegebenenfalls} & AlO_{3/2},\ R'AlO_{2/2} \\ \text{und/oder} & TiO_{4/2},\ R'TiO_{3/2}, \end{array}\right\} \quad (V)$$

abgesättigt sind und ein Verfahren zur Herstellung.

## Beschreibung

Die Erfindung betrifft geformte sulfonat- und mercaptogruppenhaltige Organopolysiloxane, ein Verfahren zur Herstellung und die Verwendung als Katalysatoren.

Sulfonierte Organosiliciumverbindungen werden in unlöslicher Form, wie in der DE-PS 32 26 093 beschrieben, insbesondere als Ionenaustauscher und fester Säurekatalysator eingesetzt. Das Verfahren zur Herstellung basiert auf der Oxidation eines Disulfan-, Trisulfan- oder Tetrasulfangruppen enthaltenden Organopolysiloxans mit $H_2O_2$ oder Persäuren. Dabei enthält man Sulfonatgruppen enthaltende Polysiloxane mit stöchiometrisch nicht definierter Zusammensetzung. Eine Verbesserung des Standes der Technik wurde durch DE 42 23 589 erreicht, die genau definierte $-SO_3H$ Gruppen-haltige kugelförmige Polysiloxane beschreibt.

Aus dem Stand der Technik sind sulfonsaure organische Ionenaustauscher bekannt, die mit schwefelhaltigen, insbesondere Mercaptogruppen enthaltenden Verbindungen modifiziert werden, um ihre Aktivität und Selektivität als Kondensationskatalysatoren zu steigern. (DE 43 12 038, FR 2 685 221, EP 0 630 878, US 5,315,042)

Hier besteht jedoch die Gefahr, daß sich die schwefelhaltige Verbindung wieder von der Oberfläche ablösen und sich die Eigenschaften des entsprechenden Katalysators somit wieder verschlechtern. (s. EP 0 583 712)

Aufgabe der Erfindung ist es, einen festen Katalysator zur Verfügung zu stellen, bei dem Sulfonat- und Mercaptogruppen kovalent an die Oberfläche des Katalysators gebunden sind. Gegenstand der Erfindung sind geformte sulfonat- und mercaptogruppenhaltige Organopolysiloxane, bestehend aus Einheiten der Formel

$$[O_{3/2}\text{-Si-}R^1\text{-}SO_3\text{-}]_x M^{x+} \qquad (I)$$

wobei $R^1$ eine lineare oder verzweigte Alkylengruppe mit 1 bis 12 C-Atomen, eine Cycloalkylengruppe mit 5 bis 8 C-Atomen oder eine Einheit der allgemeinen Formeln

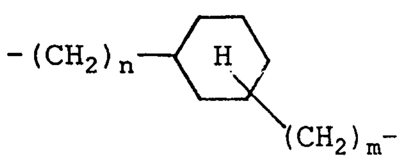

oder

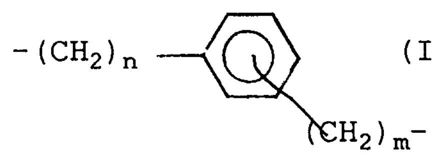

(II)

darstellt, in der n bzw. m eine Zahl von 0 bis 6 ist und die Zahl der silicium- bzw. schwefelständigen Methylengruppen angibt,

M gleich $H^+$ oder $NH_4^+$ oder ein übliches Metallion mit einer Wertigkeit von x gleich 1 bis 4 ist, und Einheiten der Formel

$$O_{3/2}\text{-Si-}R^2\text{-SH} \qquad (III)$$

mit $R^2 = R^1$, wobei die freien Valenzen der an das Siliciumatom gebundenen Sauerstoffatome durch die Siliciumatome weiterer Gruppen der Formeln (I) und/oder (II) und/oder durch die Metallatomsauerstoffgruppen der vernetzenden Brückenglieder der Formeln

$$SiO_{4/2} \qquad (IV)$$

gegebenenfalls $R''SiO_{3/2}$, $R'SiO_{3/2}$,
und gegebenenfalls $AlO_{3/2}$, $R'AlO_{2/2}$
und/oder $TiO_{4/2}$, $R'TiO_{3/2}$, (V)

abgesättigt sind,
wobei R' eine Methyl- oder Ethylgruppe ist,
R'' Phenyl bedeutet oder eine lineare oder verzweigte $C_2$-$C_{12}$-Alkylgruppe und das Verhältnis der Gruppen der Formel (I) zu Gruppen der Formel (III) von 10 : 1 bis 1 : 10,
das Verhältnis der Gruppen der Formel (I) zu Gruppen der Formel $SiO_{4/2}$ von 1 : 3 bis 1 : 20 und
das Verhältnis der Gruppen der Formel $SiO_{4/2}$ zu Gruppen der Formel (V) von 1 : 0 bis 1 : 0,5 reicht.

In einer bevorzugten Ausführungsform besitzen $R^1$ und $R^2$ in den Formeln (I) und (II) dieselbe Bedeutung, insbesondere Propylen.

$M^{x+}$ steht bevorzugt für $H^+$, insbesondere bei der Verwendung als saurer Katalysator, und dann zu mindestens 1 %, der Ionenaustauschkapazität von (I).

Gegenstand der Erfindung ist auch ein Verfahren zur Herstellung der erfindungsgemäßen geformten Organopolysiloxane, das dadurch gekennzeichnet ist, daß man sulfonierte Organosiliciumverbindungen der Formel

$$[(OH)_3Si\text{-}R^1\text{-}SO_3^-]_x M^{x+} \qquad \text{(VI)},$$

in der $R^1$, M und x dieselben Bedeutungen wie in Formel (I) haben,
und bei wäßriger Hydrolyse vernetzend wirkende $SiO_{4/2}$-(IV) sowie

$$\left.\begin{array}{ll} \text{gegebenenfalls} & R''SiO_{3/2}\text{-},\ R'SiO_{3/2}\text{-}, \\ \text{und gegebenenfalls} & AlO_{3/2}\text{-},\ R'AlO_{2/2}\text{-}, \\ \text{und/oder} & TiO_{4/2}\text{-},\ R'TiO_{3/2}\text{-}, \end{array}\right\} \qquad \text{(V)}$$

Einheiten bildende Verbindungen der allgemeinen Formeln

$$Me(OR')_{2\text{-}4}R''_{0\text{-}2} \ \text{bzw.}\ Me(OR')_{2\text{-}3}R''_{0\text{-}1} \qquad \text{(VIII)},$$

in denen bedeuten

Me: Si, Ti, Al
R', R", wie oben

in einem wäßrigen alkoholischen Medium bei 30 bis 100°C in einer Menge vermischt, daß das molare Verhältnis von Verbindungen gemäß Formel (VI) zu den die $SiO_{4/2}$-Einheiten (IV) bildenden Verbindungen von 1 : 3 bis 1 : 20 reicht, und sich ein molares Verhältnis von $SiO_{4/2}$-Einheiten zu Einheiten gemäß Formel (V) von 1 : 0 bis 1 : 0,5 einstellt, und die Bestandteile der Mischung miteinander kondensieren läßt.

Bevorzugt werden Alkohole verwendet, die zu den Alkoxygruppen an der monomeren Ausgangsstufe der zu hydrolysierenden Siliciumverbindung korrespondieren.

Besonders geeignet sind Methanol, Ethanol, n- und i-Propanol, n- und i-Butanol. Bevorzugt eingesetzt wird Tetraethoxysilan, gegebenenfalls in der als "Tetraethylsilikat 40" bekannten vorkondensierten Form. Die Wassermenge liegt vorzugsweise über der zur Hydrolyse stöchiometrisch erforderlichen Menge.

Vorzugsweise legt man die zu hydrolysierende $SiO_{4/2}$-Einheiten bildende Verbindung als alkoholische Lösung vor und versetzt diese dann mit der wäßrigen Lösung eines Organosilanols gemäß Formel (VI).

Die Umsetzung erfolgt bei Normaldruck oder einem Druck, der der Summe der Partialdrucke der vorhandenen Komponenten bei den eingestellten Temperaturen entspricht. Dieser Mischung fügt man zu Beginn, während oder nach der Kondensationsreaktion, jedoch vor dem Aushärten, eine mercaptogruppenhaltige Organosiliciumverbindung der Formel

$$(RO)_3Si\text{-}R^2\text{-}SH \qquad \text{(VII)}$$

in einem molaren Verhältnis zur Verbindung gemäß Formel (VI) von 1 : 10 bis 10 : 1 und gegebenenfalls weitere Gruppen der Formel (V) bildende Verbindungen hinzu.

Der Alkoxyrest R von Verbindungen der Formel (VII) entspricht bevorzugt dem verwendeten Alkohol, insbesondere Methyl oder Ethyl.

Die Reaktionsmischung wird bei einer Temperatur von Raumtemperatur bis 120°C bevorzugt von 40 bis 80°C geführt, wobei die Zunahme der Viskosität und die Bildung eines viskosen Gels auftritt. Innerhalb eines Zeitraumes, der unmittelbar nach Zusammengeben aller Reaktionskomponenten bis max. 10 h nach Beginn der Reaktion, jedoch bevorzugt zum Zeitpunkt der Gelbildung liegt, wird die Siloxanlösung in einem mit der Siloxanlösung nicht mischbaren Lösungsmittel dispergiert.

Die mit der Überführung der kohärenten flüssigkeitsdurchsetzten gelartigen Masse in separate sphärische Teilchen einhergehende Formungsphase beginnt mit dem Versetzen der (an)gelierten Reaktionsmischung mit diesem Lösungsmittel in der vorgesehenen Menge.

Geeignete Lösungsmittel sind zum Beispiel lineare oder verzweigte Alkohole mit 6 bis 18 C-Atomen oder Phenole, lineare oder verzweigte symmetrische oder unsymmetrische Dialkylether sowie Di- oder Triether (wie Ethylenglykoldimethylether, chlorierte oder fluorierte Kohlenwasserstoffe, mit einer oder mehreren Alkylgruppen substituierte Aromaten oder Aromatengemische, wie zum Beispiel Toluol oder Xylol, weitgehend mit Wasser nicht mischbare symmetrische und unsymmetrische Ketone.

Bevorzugt wird der (an)gelierten Reaktionsmischung jedoch ein linearer oder verzweigter Alkohol mit 6 bis 12 C-Atomen, Toluol oder o-, m-, p-Xylol, einzeln oder im Gemisch, zugesetzt.

Einfluß auf die Korngröße nimmt darüber hinaus auch die Intensität, mit der die viskose Reaktionsmischung in dem weitgehend wasserunlöslichen Lösungsmittel, welches in der Formungsphase als Dispersionsmittel zugesetzt wird, dispergiert wird. Durch starkes Rühren wird regelmäßig die Ausbildung eines feineren Korns begünstigt. Zur Unterstützung der Porenbildung kann der wäßrigen Phase eines der bekannten Tenside, wie zum Beispiel langkettige Carbonsäuren oder deren Salze oder Polyalkylenglykole in üblichen Konzentrationen verwendet werden.

Die bevorzugte Temperatur, bei der die Dispergierung der Siloxan-enthaltenden wäßrigen Phase in der organischen Phase durchgeführt und aus der dispersen Phase kugelförmiger Feststoff gebildet wird, liegt in der Regel zwischen 50 und 150°C oder ist insbesondere die Rückflußtemperatur der Gesamtmischung. Grundsätzlich können aber dieselben Temperaturen wie in der Gelierstufe angewandt werden. Die Gesamtdauer von Dispergierstufe und Nachreaktion beträgt in der Regel 0,5 bis 48 Stunden.

Sowohl die Gelierung als auch die Formung können bei Normaldruck oder einem Überdruck, welcher der Summe der Partialdrucke der Komponenten der Reaktionsmischung bei der jeweils angewandten Temperatur entspricht, durchgeführt werden.

Die Abtrennung des kugelig geformten feuchten Feststoffs von dem flüssigen Dispersionsmittel kann durch übliche Maßnahmen, wie Dekantieren, Abfiltrieren oder Zentrifugieren erfolgen.

Gegebenenfalls wird der Feststoff nach dem Waschen noch einmal in einer wäßrigen Lösung (die gegebenenfalls HCl enthält) bei einer Temperatur von 90 bis 170°C unter Rühren zur Nachhärtung gegebenenfalls hydrothermal nachbehandelt.

Das Endprodukt wird nach einem oder mehreren der folgenden Schritte erhalten:

- Abtrennen aus der flüssigen Phase,
- Waschen bzw. Extrahieren von Lösungsmitteln,
- Trocknen,
- Klassieren oder Mahlen

Die Trocknung kann grundsätzlich bei Raumtemperatur bis 250°C, gegebenenfalls unter Schutzgas oder im Vakuum, durchgeführt werden. Zur Härtung und Stabilisierung kann der getrocknete geformte Feststoff bei Temperaturen von 150 bis 300°C getempert werden.

Je nach Vorbehandlung besitzen die kugelig geformten erfindungsgemäßen Polysiloxane einen Teilchendurchmesser von 0,01 bis 3,0, vorzugsweise 0,05 bis 2,0 mm, eine spezifische Oberfläche von > 0 bis 1000 $m^2/g$ ein Porenvolumen von > 0,1 bis 6,0 ml/g und eine Schüttdichte von 50 bis 1000 g/l, vorzugsweise 100 bis 800 g/l. Die einstellbaren Porendurchmesser liegen im Bereich von > 0,1 bis 1000 nm.

Die erhaltenen starksauren organofunktionellen Polysiloxane sind als Kondensationskatalysatoren einsetzbar. Aufgrund der kovalent eingebundenen und co-katalytisch wirkenden Mercaptogruppen sind die Materialien besonders für die Kondensation von Phenol und hierbei insbesondere für die Bisphenol-A-Synthese geeignet. Überraschend ist ihre gegenüber dem Stand der Technik deutlich verbesserte Standzeit und Selektivität. Insbesondere entfällt bei der Kondensation von Phenol mit Ketonen die sonst notwendige Vorbehandlung der dem Stand der Technik nach eingesetzten organischen Ionentaustauscherharze, wie das Quellen und die Belegung mit Aminoalkymercaptanen. Ein Ausbluten oder Auswaschen der Mercaptoverbindung tritt bei den erfindungsgemäßen Katalysatorsystemen unter den Reaktionsbedingungen der Bisphenol-A-Synthese nicht auf. Die mechanische Stabilität der Polysiloxankügelchen und ihre katalytische Aktivität ermöglicht ihren Einsatz in der Kondensationsreaktion zwischen Ketonen und Phenol bei hohen Raum/Zeitausbeuten, hohen Strömungsgeschwindigkeiten und aufgrund des anorganischen Netzwerkes hohen Reaktionstemperaturen. Die bevorzugte Einsatztemperatur des Katalysators bei der Kondensation von Aceton mit Phenol liegt zwischen 50 und 180°C. Weitere Vorteile des Katalysators liegen in seiner hohen Porosität und seiner guten Benetzbarkeit sowohl mit Phenol als auch mit Keton.

**Beispiel 1**

484g Tetraethylorthosilikat 40 ("TES 40", vorkondensiertes Tetraethylorthosilikat, entsprechend der Bildung von 3,22 mol $SiO_2$) wurden zusammen mit 180 ml Ethanol in einem 3-l-Glasgefäß mit Doppelmantel, KPG-Rührer und

Rückflußkühler vorgelegt und auf 55°C aufgeheizt. Bei Erreichen dieser Temperatur wurden 655 ml (360 mmol) einer 0,55 molaren auf 80°C vorgewärmten wäßrigen Lösung der sulfonierten Organosilizium-verbindung mit der Formel $(HO)_3Si\text{-}CH_2CH_2CH_2SO_3H$ (3-Trihydroxysilylpropylsulfonsäure) unter kräftigem Rühren innerhalb von 1 Minute zugesetzt. Dabei stieg die Temperatur im Reaktor auf 75°C an. Nach der Zugabe wurde die Reaktionsmischung auf 60°C abgekühlt und ca. 20 Minuten bei dieser Temperatur weitergerührt. Dann wurden 70,7g (360 mmol) auf 50°C vorgewärmtes 3-Mercaptopropyltrimethoxysilan ($(H_3CO)_3Si\text{-}CH_2CH_2CH_2SH$) zugesetzt. Nach weiteren 10 Minuten trat eine merkliche Verdickung der klaren Lösung auf. Dem sich bildenden Gel wurden in einem Guß 1900 ml technisches Xylol zugesetzt. Das 2-Phasensystem, die Siloxan-enthaltende wäßrig/alkoholische Phase und die organische Xylolphase, wurde auf Rückflußtemperatur erwärmt (80°C) und 2 Stunden gerührt. Schon nach kurzer Zeit kam es zur Ausbildung von kleinen Kügelchen aus der Siloxan-enthaltenden Phase. Nach dem Abkühlen des Ansatzes wurde die überstehende organische Phase abgesaugt und der in Form kleiner Kügelchen vorliegende Feststoff zweimal mit Wasser gewaschen und dann mit 1000 ml 2n HCl-Lösung versetzt und 16 h bei 150°C in einem mit Teflonhülse ausgestatteten Autoklaven unter Eigendruck gerührt. Das Produkt wurde anschließend abfiltriert, mit Wasser chloridfrei gewaschen dann mit Ethanol mehrmals extrahiert. Nach 16 stündiger Trocknung bei 130°C im Wasserstrahlvakuum wurden 302 g eines in Form kleiner Kugeln vorliegenden Sulfonat- und Mercaptogruppen-haltigen Polysiloxanes, bestehend aus Einheiten der Formel

$$O_{3/2}\ Si\text{-}CH_2CH_2CH_2SO_3H \cdot O_{3/2}\ Si\text{-}CH_2CH_2CH_2SH \cdot 9\ SiO_2$$

erhalten.

| | |
|---|---|
| Korngrößenverteilung: | 18%: 0,1 - 0,3 mm<br>80%: 0,3 - 1,4 mm<br>Unter- und Überkorn: 2% |
| Schüttdichte: | 285 g/l |
| Spez. Oberfläche (BET): | 666 $m^2/g$ |
| Porenvolumen: | 2,56 ml/g ( davon 1,46 ml/g Mesoporen mit einem Maximum der Porengrößenverteilung bei 8,5 nm und 1,1 ml/g Makroporen) |
| $H^+$-Kapazität: | 0,64 mmol/g |

| Elementaranalyse (Theorie in Klammern angegeben): | |
|---|---|
| C 8,3%(8,5%); | H 1,5%(1,7%); |
| Si 38%(36,6%); | S 7,0%(7,6%) |

**Beispiel 2**

164g Tetraethylorthosilikat 40 ("TES 40", vorkondensiertes Tetraethylorthosilikat, entsprechend der Bildung von 1,09 mol $SiO_2$) wurden zusammen mit 58,2 g (244 mmol) 3-Mercaptopropyltriethoxysilan ($(H_5\ C_2\ O)_3Si\text{-}CH_2CH_2CH_2SH$) und 61 ml Ethanol in einem 3-l-Glasgefäß mit Doppelmantel, KPG-Rührer und Rückflußkühler vorgelegt und 3 Stunden am Rückfluß gekocht, dann auf 70°C abgekühlt. Bei Erreichen dieser Temperatur wurden 244 ml (122 mmol) einer 0,50 molaren auf 65°C vorgewärmten wäßrigen Lösung der sulfonierten Organosiliziumverbindung mit der Formel $(HO)_3Si\text{-}CH_2CH_2CH_2SO_3H$ (3-Trihydroxysilyl-propylsulfonsäure) unter kräftigem Rühren innerhalb von 1 Minute zugesetzt. Dabei stieg die Temperatur im Reaktor auf 78°C an. Nach der Zugabe wurde die Reaktionsmischung auf 63°C abgekühlt und ca. 125 Minuten bei dieser Temperatur bis zum Auftreten einer merklichen Verdickung der klaren Lösung weitergerührt. Dem sich bildenden Gel wurden in einem Guß 710 ml technisches Xylol zugesetzt. Das 2-Phasensystem wurde auf Rückflußtemperatur erwärmt (80°C) und 2 Stunden gerührt. Schon nach kurzer Zeit kam es zur Ausbildung von kleinen Kügelchen aus der Siloxan-enthaltenden Phase. Nach dem Abkühlen des Ansatzes wurde der Ansatz wie in Beispiel 1 beschrieben aufgearbeitet. Es wurden 188 g (100% d. Theorie) eines in Form kleiner Kugeln vorliegenden Sulfonat- und Mercaptogruppen-haltigen Polysiloxanes, bestehend aus Einheiten der Formel

$$O_{3/2}\,Si\text{-}CH_2CH_2CH_2SO_3H \cdot 2\;O_{3/2}\,Si\text{-}CH_2CH_2CH_2SH \cdot 9\;SiO_2$$

erhalten.

| | |
|---|---|
| Korngrößenverteilung: | 66%: 0,1 - 0,3 mm<br>34%: 0,3 - 1,0 mm<br>Unterkorn: < 0,5% |
| Schüttdichte: | 292 g/l |
| Spez. Oberfläche (BET): | 670 $m^2/g$ |
| Porenvolumen: | 2,34 ml/g ( davon 1,48 ml/g Mesoporen mit einem Maximum der Porengrößenverteilung bei 8 nm und 0,86 ml/g Makroporen) |
| $H^+$-Kapazität: | 0,56 mmol/g |

| Elementaranalyse: (Theorie in Klammern angegeben): | |
|---|---|
| C 10,8%(11,1%); | H 2,0%(2,2%); |
| S 8,9%(9,9%) | |

**Beispiel 3**

514g Tetraethylorthosilikat 40 (entsprechend der Bildung von 3,42 mol $SiO_2$) wurden zusammen mit 185 ml Ethanol in einem 3-l-Glasgefäß mit Doppelmantel, KPG-Rührer und Rückflußkühler vorgelegt und auf 55°C aufgeheizt. Bei Erreichen dieser Temperatur wurden 622 ml (342 mmol) einer 0,55 molaren wäßrigen Lösung von $(HO)_3Si$-$CH_2CH_2CH_2SO_3H$ unter kräftigem Rühren innerhalb von 1 Minute zugesetzt. Dabei stieg die Temperatur im Reaktor auf 79°C an. Nach der Zugabe wurde die Reaktionsmischung auf 65°C abgekühlt und ca. 12 Minuten bei dieser Temperatur weitergerührt. Dann wurden 201,4g (1026 mmol) auf 50°C vorgewärmtes 3-Mercaptopropyltrimethoxysilan zugesetzt. Innerhalb von 2 Minuten trat eine merkliche Verdickung der klaren Lösung auf. Dem sich bildenden Gel wurden in einem Guß 2200 ml technisches Xylol zugesetzt. Das 2-Phasensystem wurde auf Rückflußtemperatur erwärmt (80°C) und 2 Stunden gerührt. Schon nach kurzer Zeit kam es zur Ausbildung von kleinen Kügelchen aus der Siloxanenthaltenden Phase.

Nach dem Abkühlen des Ansatzes wurde der Ansatz wie in Beispiel 1 beschrieben aufgearbeitet. Es wurden 390 g (98,5% d. Theorie) eines in Form kleiner Kugeln vorliegenden Sulfonat- und Mercaptogruppen-haltigen Polysiloxanes, bestehend aus Einheiten der Formel

$$O_{3/2}\,Si\text{-}CH_2CH_2CH_2SO_3H \cdot 3\;O_{3/2}\,Si\text{-}CH_2CH_2CH_2SH \cdot 10\;SiO_2$$

erhalten.

| | |
|---|---|
| Korngrößenverteilung: | 2%: 0,1 - 0,3 mm<br>98%: 0,3 - 1,8 mm |
| Schüttdichte: | 320 g/l |
| Schwefelgehalt | (Theorie in Klammern angegeben):<br>S 10,3%(11,1%) |

**Beispiel 4**

564g Tetraethylorthosilikat 40 (entsprechend der Bildung von 3,75 mol $SiO_2$) wurden zusammen mit 140 ml Ethanol in einem 3-l-Glasgefäß mit Doppelmantel, KPG-Rührer und Rückflußkühler vorgelegt und auf 60°C aufgeheizt. Bei Erreichen dieser Temperatur wurden 700 ml (420 mmol) einer 0,6 molaren wäßrigen Lösung von $(HO)_3Si$-$CH_2CH_2CH_2SO_3H$ unter kräftigem Rühren innerhalb von 1 Minute zugesetzt. Dabei stieg die Temperatur im Reaktor

auf 78°C an. Nach der Zugabe wurde die Reaktionsmischung auf 60°C abgekühlt und ca. 22 Minuten bei dieser Temperatur weitergerührt. Dann wurden 20,6g (105 mmol) auf 55°C vorgewärmtes 3-Mercaptopropyltrimethoxysilan zugesetzt. Innerhalb von 3 Minuten trat eine merkliche Verdickung der klaren Lösung auf. Dem sich bildenden Gel wurden in einem Guß 2200 ml technisches Xylol zugesetzt. Das 2-Phasensystem wurde auf Rückflußtemperatur erwärmt (80°C) und 2 Stunden gerührt. Schon nach kurzer Zeit kam es zur Ausbildung von kleinen Kügelchen aus der Siloxan-enthaltenden Phase.

Nach dem Abkühlen des Ansatzes wurde der Ansatz wie in Beispiel 1 beschrieben aufgearbeitet. Es wurden 313 g eines in Form kleiner Kugeln vorliegenden Sulfonat- und Mercaptogruppen-haltigen Polysiloxanes, bestehend aus Einheiten der Formel

$$4\ O_{3/2}\ Si\text{-}CH_2CH_2CH_2SO_3H \cdot 1\ O_{3/2}\ Si\text{-}CH_2CH_2CH_2SH \cdot 36\ SiO_2$$

erhalten.

| | |
|---|---|
| Korngrößenverteilung: | 22%: 0,1 - 0,4 mm |
| | 78%: 0,4 - 2,0 mm |
| Schüttdichte: | 311 g/l |
| Schwefelgehalt | (Theorie in Klammern angegeben): |
| | S 5,3%(5,4%) |

**Beispiel 5**

462g Tetraethylorthosilikat 40 (entsprechend der Bildung von 3,08 mol $SiO_2$) wurden zusammen mit 185 ml Ethanol in einem 3-l-Glasgefäß mit Doppelmantel, KPG-Rührer und Rückflußkühler vorgelegt und auf 55°C aufgeheizt. Bei Erreichen dieser Temperatur wurden 622 ml (342 mmol) einer 0,55 molaren wäßrigen Lösung von $(HO)_3Si\text{-}CH_2CH_2CH_2SO_3H$ unter kräftigem Rühren innerhalb von 1 Minute zugesetzt. Dabei stieg die Temperatur im Reaktor auf 78°C an. Nach der Zugabe wurde die Reaktionsmischung auf 60°C abgekühlt und ca. 15 Minuten bei dieser Temperatur weitergerührt. Dann wurden 201,4g (1026 mmol) 3-Mercaptopropyltrimethoxysilan und 56,2g (342 mmol) Propyltriethoxysilan (vorher gemischt und auf 45°C vorgewärmt) zugesetzt. Nach weiteren 10 Minuten trat eine merkliche Verdickung (Gelierung) der klaren Lösung auf. Dem sich bildenden Gel wurden in einem Guß 2200 ml technisches Xylol zugesetzt. Das 2-Phasensystem wurde auf Rückflußtemperatur erwärmt (80°C) und 2 Stunden gerührt. Schon nach kurzer Zeit kam es zur Ausbildung von kleinen Kügelchen aus der Siloxan-enthaltenden Phase.

Nach dem Abkühlen des Ansatzes wurde der Ansatz wie in Beispiel 1 beschrieben aufgearbeitet. Es wurden 403 g eines in Form kleiner Kugeln (Korngrößenspektrum: 50 - 400 μm) vorliegenden Sulfonat-, Mercapto- und Propylgruppenhaltigen Polysiloxanes, bestehend aus Einheiten der Formel

$$O_{3/2}\ Si\text{-}CH_2CH_2CH_2SO_3H \cdot 3\ O_{3/2}\ Si\text{-}CH_2CH_2CH_2SH \cdot O_{3/2}\ Si\text{-}CH_2CH_2CH_3 \cdot 9\ SiO_2$$

erhalten.

Schüttdichte: 213 g/l

| Elementaranalyse (Theorie in Klammern angegeben): | |
|---|---|
| C 14,8%(15,1%); | H 2,9%(3,0%); |
| S 10,9%(10,8%) | Si 33%(33%) |

**Beispiel 6**

210g Tetraethylorthosilikat 40 (entsprechend der Bildung von 1,4 mol $SiO_2$) wurden zusammen mit 69,0 g (280 mmol) $Al(OC_4H_9)_3$ in einem 3-l-Glasgefäß mit Doppelmantel, KPG-Rührer und Rückflußkühler vorgelegt und 3 h am Rückfluß gekocht, dann auf 35°C abgekühlt und mit 200 ml (140 mmol) einer 0,7 molaren wäßrigen Losung von $(HO)_3Si\text{-}CH_2\ \text{-}CH_4\ \text{-}CH_2\ \text{-}\ SO_3H$ versetzt. Dabei stieg die Temperatur im Reaktor auf 70 °C an. Die Temperatur wurde innerhalb von 30 Minuten auf 40°C abgekühlt und dann 55,0g (280 mmol) 3-Mercaptopropyltrimethoxysilan zugesetzt.

Die Reaktionstemperatur stieg auf 50°C, und es wurde bis zum Gelieren des Ansatzes weitergerührt. Dann wurden in einem Guß 1800 ml technisches Xylol zugesetzt. Das 2-Phasensystem wurde auf Rückflußtemperatur erwärmt (80°C) und 2 Stunden gerührt. Nach dem Abkühlen des Ansatzes wurde der Ansatz von der Mutterlauge abfiltriert, dreimal mit Ethanol gewaschen und bei 135°C unter $N_2$-Schutzgas getrocknet. Es wurden 165 g eines in Form kleiner Kugeln vorliegenden Polysiloxanes, bestehend aus Einheiten der Formel

$$O_{3/2}\,Si\text{-}CH_2\text{-}C_6H_4\text{-}CH_2\text{-}SO_3H \cdot 2\ O_{3/2}\,Si\text{-}CH_2CH_2CH_2SH \cdot 10\ SiO_2 \cdot 2\ AlO_{3/2}$$

erhalten.

Schüttdichte: 650 g/l

Schwefelgehalt (Theorie in Klammern angegeben):
S 7,5%(8,0%)

Aluminiumgehalt (Theorie in Klammern angegeben):
Al 4,3%(4,5%)

**Patentansprüche**

1. Geformte sulfonat- und mercaptogruppenhaltige Organopolysiloxane, bestehend aus Einheiten der Formel

$$[O_{3/2}\text{-}Si\text{-}R^1\text{-}SO_3\text{-}]_x M^{x+} \qquad (I),$$

wobei

$R^1$ eine lineare oder verzweigte Alkylengruppe mit 1 bis 12 C-Atomen, eine Cycloalkylengruppe mit 5 bis 8 C-Atomen oder eine Einheit der allgemeinen Formeln

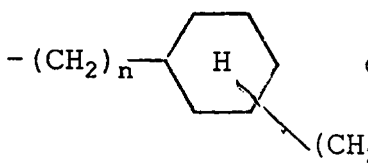 oder 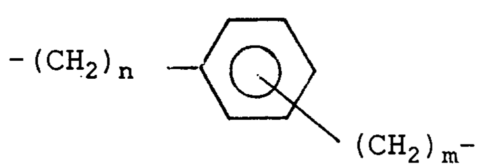 (II)

darstellt, in der n bzw. m eine Zahl von 0 bis 6 ist und die Zahl der silicium- bzw. schwefelständigen Methylengruppen angibt,
M gleich $H^+$ oder $NH_4^+$ oder ein Metallion mit einer Wertigkeit von x gleich 1 bis 4 ist,
und Einheiten der Formel

$$O_{3/2}\text{-}Si\text{-}R^2\text{-}SH \qquad (III)$$

mit $R^2 = R^1$, wobei die freien Valenzen der an das Siliciumatom gebundenen Sauerstoffatome durch die Siliciumatome weiterer Gruppen der Formeln (I) und/oder (II) und/oder durch die Metallatomsauerstoffgruppen der vernetzenden Brückenglieder der Formeln

$$SiO_{4/2} \qquad (IV)$$

| | | |
|---|---|---|
| gegebenenfalls | $R''SiO_{3/2}$, $R'SiO_{3/2}$, | |
| und gegebenenfalls | $AlO_{3/2}$, $R'AlO_{2/2}$ | (V) |
| und/oder | $TiO_{4/2}$, $R'TiO_{3/2}$, | |

abgesättigt sind,

wobei R' eine Methyl- oder Ethylgruppe ist,
R" Phenyl bedeutet oder eine lineare oder verzweigte $C_2$-$C_{12}$-Alkylgruppe und das Verhältnis der Gruppen der Formel (I) zu Gruppen der Formel (III) von 10 : 1 bis 1 : 10,
das Verhältnis der Gruppen der Formel (I) zu Gruppen der Formel $SiO_{4/2}$ von 1 : 3 bis 1 : 20, und
das Verhältnis der Gruppen der Formel $SiO_{4/2}$ zu Gruppen der Formel (V) von 1 : 0 bis 1 : 0,5 reicht.

2. Organopolysiloxane gemäß Anspruch 1,
**dadurch gekennzeichnet**,
daß $R^1$ und $R^2$ in den Formeln (I) und (III) dieselbe Bedeutung haben.

3. Organopolysiloxane gemäß den Ansprüchen 1 und 2,
**dadurch gekennzeichnet**,
daß $R^1$ und $R^2$ für die Propylengruppe stehen, und $M^{x+}$ $H^+$ bedeutet.

4. Verfahren zur Herstellung von geformten Organopolysiloxanen gemäß den Ansprüchen 1 bis 3,
**dadurch gekennzeichnet**,
daß man sulfonierte Organosiliciumverbindungen der Formel

$$[(OH)_3Si\text{-}R^1\text{-}SO_3^-]_xM^{x+} \qquad \text{(VI)},$$

in der $R^1$, M und x dieselben Bedeutungen wie in Formel (I) haben,
und bei wäßriger Hydrolyse vernetzend wirkende $SiO_{4/2}$-Einheiten (IV)
sowie

| | | |
|---|---|---|
| gegebenenfalls | $R''SiO_{3/2}$-, $R'SiO_{3/2}$-, | (V) |
| und gegebenenfalls | $AlO_{3/2}$-, $R'AlO_{2/2}$-, | |
| und/oder | $TiO_{4/2}$-, $R'TiO_{3/2}$-, | |

Einheiten bildende Verbindungen der allgemeinen Formeln

$$Me(OR')_{2\text{-}4}R''_{0\text{-}2} \text{ bzw. } Me(OR')_{2\text{-}3}R''_{0\text{-}1} \qquad \text{(VIII)},$$

in denen bedeuten

Me: Si, Ti, Al
R', R", wie oben

in einem wäßrigen alkoholischen Medium bei 30 bis 100°C in einer Menge vermischt,
daß das molare Verhältnis von Verbindungen gemäß Formel (VI) zu den die $SiO_{4/2}$-Einheiten (IV) bildenden Verbindungen von 1 : 3 bis 1 : 20 reicht, und sich ein Verhältnis von $SiO_{4/2}$-Einheiten zu Einheiten gemäß Formel (V) von 1 : 0 bis 1 : 0,5 einstellt,
die Bestandteile der Mischung miteinander kondensieren läßt, zu dieser Mischung zu Beginn, während oder nach der Kondensationsreaktion, jedoch vor dem Aushärten, eine mecaptogruppenhaltige Organosiliciumverbindung der Formel

$$(RO)_3Si\text{-}R^2\text{-}SH \qquad \text{(VII)}$$

in einem molaren Verhältnis zur Verbindung gemäß Formel (VI) von 1 : 10 bis 10 : 1 und gegebenenfalls weitere Gruppen der Formel (V) bildende Verbindungen hinzufügt, weiter bei 20 bis 120°C, bevorzugt 40 bis 80°C, rührt, bis sich ein Gel bildet, dieses in einem mit der Polysiloxanlösung (das Gel) nicht mischbaren Lösungsmittel bei Temperaturen von 40°C bis zur Rückflußtemperatur dispergiert, den sich bildenden Feststoff anschließend abfiltriert, wäscht, gegebenenfalls hydrothermal nachbehandelt und trocknet.

5. Verfahren gemäß Anspruch 4,
**dadurch gekennzeichnet**,
daß man als Alkohol Methanol, Ethanol, Propanol oder Butanol verwendet.

6. Verfahren gemäß Anspruch 5,
**dadurch gekennzeichnet**,
daß man als Lösungsmittel Xylol, Toluol oder Octanol verwendet.

7. Verfahren gemäß Anspruch 4,
**dadurch gekennzeichnet**,
daß in den die Gruppen der Formel (V) bildenden Verbindungen die Alkoxygruppen 1 bis 4 Kohlenstoffatome aufweisen.

8. Verfahren gemäß Anspruch 4,
**dadurch gekennzeichnet**,
daß man die dispergierte Polysiloxanmischung bei einer Temperatur von 50 bis 150°C unter Normaldruck oder einem Druck, der der Summe der Partialdrucke der vorhandenen Komponenten entspricht, über einen Zeitraum von bis zu 50 Stunden nachreagieren läßt.

9. Verwendung der geformten Organopolysiloxane gemäß Anspruch 1 als Kondensationskatalysatoren.

10. Verwendung der geformten Organopolysiloxane gemäß Anspruch 9 als Katalysatoren für die Bisphenol-A-Synthese.